# EUROPÄISCHE PATENTSCHRIFT

(11) **EP 2 799 190 B1**
(45) Veröffentlichungstag und Bekanntmachung des Hinweises auf die Patenterteilung: **25.05.2016**
(21) Anmeldenummer: 14164899.8
(22) Anmeldetag: 16.04.2014
(51) Int. Cl.: B25J 9/00

(54) **Vorrichtung zum Umgang mit Artikeln**
Device for handling articles
Dispositif de manutention d'articles

(30) Priorität: 02.05.2013 DE 102013208082
(43) Veröffentlichungstag der Anmeldung: 05.11.2014
(73) Patentinhaber: Krones Aktiengesellschaft, 93073 Neutraubling (DE)
(72) Erfinder: Perl, Kurt, 93073 Neutraubling (DE); Hartl, Michael, 93073 Neutraubling (DE); Elsperger, Stefan, 93073 Neutraubling (DE); Luber, Hans, 93073 Neutraubling (DE)
(74) Vertreter: Benninger, Johannes

(56) Entgegenhaltungen:
- DE-A1- 10 216 571
- DE-A1-102010 006 155
- JP-A- 2011 045 984
- US-A1- 2005 076 723

## Beschreibung

Die vorliegende Erfindung betrifft eine Vorrichtung zum Umgang mit Artikeln gemäß den Merkmalen des Oberbegriffs des Anspruchs 1.

Eine solche Vorrichtung ist z.B. aus der DE-A1-10 2010 006 155 bekannt.

Der Umgang mit Artikeln kann eine Manipulation eines oder mehrerer Artikel und/oder ein unter dem Begriff Verbringung zusammengefasstes Verschieben und/oder Anheben und/oder Drehen um eine oder mehrere Achsen und/oder Versetzen von Artikeln auf einer Fläche oder auch von einer ersten Fläche auf eine zweite Fläche und/oder die Behandlung eines oder mehrerer Artikel, beispielsweise das Versehen eines oder mehrerer Artikel mittels einer Umreifung, einer Umverpackung, wie etwa einer Umwickelung, einem Schrumpfschlauch oder eines Kartons vorsehen oder umfassen, um nur einige denkbare Ausgestaltungen anzuführen.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Auch kann der Umgang mit Artikeln einen gleichzeitigen Umgang mit mehreren, beispielsweise relativ zueinander gruppierten Artikeln und/oder das Gruppieren von Artikeln, bei dem mehrere Artikel in einer gewünschten Ausrichtung relativ zueinander angeordnet werden, vorsehen.

Zum Umgang mit einem oder mehreren Artikeln ist bekannt, mindestens einen Manipulator zu verwenden, beispielsweise ein Werkzeug, wie etwa ein Greifer oder eine Anlagefläche, welcher Manipulator mit Hilfe einer Vorrichtung zum Umgang mit Artikeln innerhalb eines Arbeitsraums positioniert und beispielsweise entsprechend einer erforderlichen Bewegung zur Ausführung einer Manipulation und/oder einer Verbringung und/oder einer Behandlung eines oder mehrerer Artikel bewegt werden kann. Die Bewegung, die dabei vermittels einer Vorrichtung zum Umgang mit Artikeln ausgeführt wird, kann wie im Fall einer Drehung um eine oder mehrere Achsen eine punktförmige, oder im Fall einer Translationsbewegung eine geradlinige oder zwei- oder dreidimensional gekrümmt verlaufende Bewegungsbahn vorsehen. Auch beispielsweise abschnittsweise Kombinationen hieraus sind möglich.

Der Manipulator kann Teil einer genannten Vorrichtung zum Umgang mit Artikeln sein, diese umfassen oder von dieser umfasst sein. Der Manipulator kann am Ort, an den er mit Hilfe der Vorrichtung zum Umgang mit Artikeln verbracht werden kann, selbst eine oder mehrere Aktionen ausführen, wie beispielsweise eine ein- oder mehrachsige Dreh- und/oder eine ein- oder mehrdimensionale Translationsbewegung und/oder eine Greifbewegung und oder eine Rotation, um nur einige denkbare Ausgestaltungen zu nennen. Der Arbeitsraum ist dabei durch die Vorrichtung zum Umgang mit Artikeln vorgegeben. Er entspricht einem von einer Hüllfläche eingeschlossenen Volumen, auf der alle Punkte liegen, welche eine beispielsweise einen Manipulator umfassende Vorrichtung zum Umgang mit Artikeln bei größtmöglicher Auslenkung in allen Raumwinkelbereichen maximal zu erreichen in der Lage ist.

Bekannte Vorrichtungen zum Umgang mit Artikeln sind so genannte Deltaroboter. Ein Deltaroboter umfasst eine an einem Gestell oberhalb der Fläche, auf der, oder oberhalb der Flächen, zwischen denen ein Umgang mit Artikeln erfolgt, angeordnete Basis. An der Basis ist ein Gestänge bestehend aus mindestens drei Armen und einem mit jedem der mindestens drei Arme gelenkig verbundenen, zentralen Koppelelement angeordnet. Im Zentrum des Gestänges befindet sich dabei das Koppelelement. Das Koppelelement befindet sich dabei zwischen der Basis und der Fläche auf oder zwischen der Basis und den Flächen zwischen denen ein Umgang mit Artikeln erfolgt.

Deltaroboter mit drei Armen werden auch als Tripoden bezeichnet.

Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können beispielsweise über Kugelgelenke mit den jeweils zugehörigen Oberarmen und dem Koppelelement verbunden sein. Ein solcher einzelner Unterarm ist frei schwenkbar und besitzt keine Eigenstabilität.

Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen. Um Bewegungen in beliebiger Richtung parallel zu der Fläche auf oder parallel zu den Flächen zwischen denen ein Umgang mit Artikeln erfolgt ausführen zu können, schneidet wenigstens eine gestellfeste Schwenkachse mindestens eine der verbleibenden Schwenkachsen. Zwei oder mehr Schwenkachsen können parallel verlaufen. Vorzugsweise weisen alle Schwenkachsen zwei Schnittpunkte mit anderen Schwenkachsen auf.

Wenigstens einer der Unterarme kann aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen.

Das Koppelelement dient dabei als Arbeitsplattform, dem so genannten Tool Central Point (TCP). An diesem kann ein zuvor beschriebener Manipulator angeordnet sein, oder es kann einen zuvor beschriebenen Manipulator umfassen, oder es kann von einem zuvor beschriebenen Manipulator umfasst werden. Im Folgenden wird der Einfachheit halber nicht mehr zwischen diesen verschiedenen Varianten unterschieden und statt dessen einheitlich die Ausgestaltung eines am Koppelelement angeordneten Manipulators stellvertretend für alle drei Ausgestaltungen genannt, es sei denn, es ist explizit etwas anderes erwähnt.

Um einen an einem Koppelelement angeordneten Manipulator an dem Ort, an den er vermittels des Koppelelements innerhalb des Arbeitsraums verbracht wurde, um eine beispielsweise vertikal auf dem Koppelelement und/oder auf der Basis und/oder vertikal auf der gemeinsamen Ebene, innerhalb welcher die gestellfesten Schwenkachsen verlaufen, aufstehende Drehachse zu verdrehen, beispielsweise um den Manipulator auszurichten oder um einen erwünschten Umgang mit Artikeln auszuführen, ist bekannt, eine antreibbar drehbare Lagerung des Manipulators am Koppelelement sowie eine im Zentrum der Basis drehbar angetrieben gelagerte Welle vorzusehen, welche mit der drehbaren Lagerung des Manipulators am Koppelelement unverdrehbar verbunden ist. Die Welle ist dabei als mittels Kreuz- oder Kardangelenken mit ihrem Antrieb an der Basis und mit der drehbaren Lagerung des Manipulators am Koppelelement verbundene Kardanwelle ausgeführt. Darüber hinaus ist die Welle als Teleskopstange ausgeführt, um verschiedene Abstände des Koppelelements zur Basis während dessen Bewegungen im Arbeitsraum ausgleichen zu können. Die Teleskopstange kann ineinanderschiebbar oder beispielsweise an der Basis in Richtung deren momentaner axialer Erstreckung gleitend gelagert sein. Eine solche, als Kardanwelle und Teleskopstange ausgeführte Welle wird im Nachfolgenden als Teleskopwelle bezeichnet. Das Koppelelement kann hierbei als ein einfacher Lagerring zur Aufnahme des Manipulators ausgeführt sein, der an seinem Außenumfang Anschlüsse zur Befestigung der Unterarme aufweist. Zwischen dem Lagerring und einem entsprechenden Gegenstück am Manipulator können beispielsweise Wälzelemente zur Verringerung von Reibungsverlusten und Verschleiß vorgesehen sein.

Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels der Teleskopwelle gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Benötigt ein am Koppelelement angeordneter Manipulator einen Antrieb zur Ausführung einer oder mehrerer Aktionen, wie beispielsweise im Falle eines Greifers zur Ausführung eines einem Schließen und Öffnen des Greifers entsprechendes Zupacken und Loslassen eines oder mehrerer Artikel, so muss ein entsprechender Antrieb nebst gegebenenfalls erforderlichem Getriebe am Koppelelement angeordnet werden und Energieleitungen zur Betätigung des Antriebs von der Basis zum Koppelelement verlegt werden, wie etwa Stromkabel, Pneumatik- oder Hydraulikleitungen, welche darüber hinaus entsprechend der Teleskopwelle unterschiedliche Abstände zwischen Basis und Koppelelement auszugleichen in der Lage sein müssen.

Dadurch steigt das Eigengewicht des Deltaroboters am Koppelelement bei gleichzeitig sinkender, zum Umgang mit Artikeln zur Verfügung stehender Nutzlast.

Damit einhergehend ist der Nachteil einer eingeschränkten Taktung. Die Taktung kann als Quotient der Anzahl von Artikeln zur Zeit, innerhalb der mit dieser Anzahl von Artikeln umgegangen wird, beschrieben werden.

Die Taktung, mit der innerhalb möglichst kurzer Zeit mit möglichst vielen Artikeln umgegangen werden kann, stellt dabei einen wesentlichen Kostenfaktor in der Verpackungstechnik und in der Verpackungsindustrie dar. Je kürzer die Taktung, desto höher ist dabei der Artikelumsatz und um so höher und damit besser ist die Auslastung der hierfür vorgesehenen Maschinen, Anlagen und Einrichtungen.

Die Taktung ist dabei begrenzt durch die Geschwindigkeit, mit der zum Umgang mit Artikeln erforderliche Bewegungen höchstens ausgeführt werden können.

Bedingt durch die filigrane Konstruktion der Teleskopwelle ist das Drehmoment, das von der Basis zum Koppelelement nach unten übertragen werden kann, begrenzt. Dieses genügt beispielsweise nicht für ein schnelles Drehen von Gebinden, wofür höhere Drehmomente benötigt werden.

Die Entfernung des Eigengewichts des Deltaroboters am Koppelelement zur Basis und dessen Exzentrizität zur Drehachse hat außerdem hohe Momente für die Dreh- und Linearbewegungen des Koppelelements innerhalb des Arbeitsraums zur Folge, einhergehend mit einer mit zunehmendem Eigengewicht abnehmenden erzielbaren Geschwindigkeit und damit Verschlechterung der Taktung bei der Verbringung.

Durch zur Steuerung und Energieversorgung des Manipulatorantriebs erforderliche Energieleitungen steigt das Eigengewicht zusätzlich, wodurch die beschriebenen Einschränkungen verstärkt werden.

Durch DE 10 2010 006 155 A1 ist eine als ein Tripod ausgeführte gattungsgemäße Vorrichtung zum Umgang mit Artikeln bekannt. Diese besteht aus einer Basis, die an einem Gestell oberhalb einer Fläche, auf der ein Umgang mit Artikeln erfolgt, angeordnet ist. An der Basis ist ein Gestänge bestehend aus drei Armen und einem mit jedem der drei Arme gelenkig verbundenen, zentralen Koppelelement angeordnet. Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Alle Oberarme sind jeweils um innerhalb einer gemeinsamen Ebene liegende Schwenkachsen verschwenkbar angetrieben gelagert. Die Schwenkachsen schneiden einander innerhalb deren gemeinsamer Ebene. Damit weisen alle Schwenkachsen zwei Schnittpunkte mit den jeweils verbleibenden Schwenkachsen auf. Die Unterarme aller Arme bestehen jeweils aus zwei ein Parallelogrammgestänge bildenden Gestängeelementen. Dadurch wird das Koppelelement immer parallel zur Fläche, auf der ein Umgang mit Artikeln erfolgt, und parallel zur Basis geführt. Der Tripod umfasst darüber hinaus eine Teleskopwelle, mit der eine am Koppelelement drehbar gelagerte Welle gedreht werden kann. Zum Ausgleich verschiedener Abstände zwischen Koppelelement und Basis ist die Teleskopwelle an der Basis in Richtung ihrer momentanen axialen Erstreckung gleitend gelagert. Am Koppelelement kann ein Manipulator angeordnet sein, der vermittels einer Drehung der am Koppelelement drehbar gelagerten Welle betätigt, beispielsweise gedreht werden kann. Zu Zwecken weiterer Betätigungen des Manipulators können zusätzliche Teleskopwellen vorgesehen sein, welche Drehmomente von an der Basis angeordneten Antrieben zum Manipulator übertragen. Die Teleskopwellen verlaufen dabei weder parallel, noch koaxial zueinander.

Durch US 8,210,068 B2 ist eine ebenfalls als Tripod ausgeführte Vorrichtung zum Umgang mit Artikeln bekannt. Diese umfasst eine an einem Gestell angeordnete Basis, an der ein Gestänge bestehend aus drei Armen, deren Oberarme jeweils um gestellfeste, horizontale Schwenkachsen angetrieben verschwenkbar gelagert sind, und deren Unterarme als Parallelgestänge ausgeführt mit einem Koppelelement verbunden sind. Eine Teleskopwelle ist vermittels eines Kardangelenks mit einer drehbar am Koppelelement gelagerten Welle verbunden. In einer vollkardanischen Aufhängung an der Basis ist die Teleskopwelle in Richtung ihrer Längserstreckung gleitend geführt. Die Teleskopwelle weist dabei einen profilierten Querschnitt auf, der ein Verdrehen der Teleskopwelle gegenüber deren vollkardanischer Aufhängung verhindert. Die vollkardanische Aufhängung ist darüber hinaus um eine vertikale Achse drehbar im Zentrum der Basis angeordnet. Vermittels eines gesonderten Antriebs kann die vollkardanische Aufhängung um die vertikale Achse geschwenkt und mit ihr die Teleskopwelle gedreht werden. Die vermittels der über die Teleskopwelle auf die am Koppelelement drehbar gelagerte Welle übertragene Drehbewegung kann zur Betätigung eines am Koppelement angeordneten Manipulators vorgesehen werden.

Aus der JP-A-2011 045 984 ist eine Vorrichtung zum Umgang mit Artikeln bekannt, umfassend eine kreisrunde Basis und ein Parallelgestänge bestehend aus drei angetriebenen Armen und einem zentralen Koppelelement, wobei die Lagerungen der Arme synchron entlang des Basisumfangs bewegbar sind, um die Rektion des Gestänges gegenüber der Basis zu ermöglichen.

Aus der US-A-2005 076723 ist eine Vorrichtung mit einem auf einer Drehplatte angeordneten Parallelgestänge bekannt.

Eine Aufgabe der Erfindung ist eine verbesserte Vorrichtung zum Umgang mit Artikeln zur Verfügung zu stellen, welche die Nachteile des Standes der Technik behebt und insbesondere höhere Taktungen nebst einer höheren Drehmomentübertragung von der Basis an das Koppelelement erlaubt sowie ein verringertes Eigengewicht der Vorrichtung am Koppelelement einhergehend mit einer vergrößerten, zum Umgang mit Artikeln zur Verfügung stehender Nutzlast aufweist.

Die Aufgabe wird gelöst durch die Merkmale des unabhängigen Anspruchs. Weitere vorteilhafte Ausgestaltungen werden durch die Unteransprüche beschrieben.

Demnach ist zur Lösung der Aufgabe eine Vorrichtung zum Umgang mit Artikeln vorgesehen. Diese umfasst:
- ein Gestell mit einer beispielsweise zentralen Partie oberhalb mindestens einer Fläche, auf der mit Artikeln umgegangen wird, beispielsweise oberhalb einer Fläche, auf der mit Artikeln umgegangen wird oder oberhalb von Flächen, auf und/oder zwischen denen mit Artikeln umgegangen wird,
- eine Basis, welche an der beispielsweise zentralen Partie des Gestells oberhalb der Fläche, auf der mit Artikeln umgegangen wird, oder oberhalb der Flächen, zwischen denen mit Artikeln umgegangen wird, angeordnet ist, sowie
- ein Gestänge bestehend aus mindestens drei angetriebenen Armen und einem zentralen Koppelelement.

Die Fläche auf der oder die Flächen zwischen denen ein Umgang mit Artikeln erfolgt, kann bzw. können beispielsweise horizontal oder geneigt ebenen oder gewölbt verlaufend, fest stehend oder bewegt sein, wobei auch beispielsweise abschnittsweise Kombinationen möglich sind und/oder beispielsweise eine Fläche eine Eigenschaft aufweist, wie beispielsweise eine fest stehende Anordnung, und die andere Fläche eine hiervon verschiedene Eigenschaft aufweist, wie beispielsweise eine bewegte Ausführung.

Jeder der angetriebenen Arme besteht aus einem um eine eigene, beispielsweise parallel zu der Fläche, auf der mit Artikeln umgegangen wird, oder parallel zu den Flächen, zwischen denen mit Artikeln umgegangen wird, verlaufende Schwenkachse drehbar angetrieben gelagerten Oberarm und einem an dem Oberarm gelenkig angeordneten und mit dem Koppelement gelenkig verbundenen Unterarm. Jeder der Arme verfügt über einen eigenen Antrieb zum individuellen Verschwenken des jeweiligen Oberarms um dessen Schwenkachse.

Als Antriebe für die Oberarme kommen via der Schwenkachsen auf die Oberarme einwirkende Schwenkantriebe mit oder ohne Getriebe, beispielsweise getriebelose Direktantriebe, oder andersartige, beispielsweise über Zug- und/oder Druckstangen oder als Linearantriebe ausgeführte, auf die Oberarme einwirkende, beispielsweise elektrische, pneumatische oder hydraulische Antriebe in Frage.

Wenigstens einer der Unterarme der Vorrichtung kann als ein Parallelgestänge aus zwei Elle und Speiche bildenden Gestängeelementen ausgebildet sein. Das Parallelgestänge ist vorzugsweise so ausgebildet, dass das Koppelelement parallel zur Schwenkachse des zugehörigen Oberarms des jeweiligen Arms gehalten wird. Dies kann dadurch erhalten werden, indem die das Parallelgestänge bildenden Gestängeelemente des Unterarms in Richtung der Erstreckung der Schwenkachse des zugehörigen Oberarms des jeweiligen Arms zueinander beabstandet sind und die gelenkigen Verbindungen der beiden Gestängeelemente mit dem Oberarm auf einer ersten, parallel zur Schwenkachse des zugehörigen Oberarms des jeweiligen Arms verlaufenden Geraden liegen, sowie die gelenkigen Verbindungen der beiden Gestängeelemente mit dem Koppelelement auf einer zweiten, parallel zur Schwenkachse des zugehörigen Oberarms des jeweiligen Arms verlaufenden Geraden liegen. Eine Ausführung eines Unterarms als ein solches Parallelgestänge hält das Koppelelement parallel zur Schwenkachse des zugehörigen Oberarms des jeweiligen Arms.

Vorzugsweise sind mindestens zwei Unterarme von Armen der Vorrichtung, deren Oberarme nicht parallel zueinander verlaufende, sondern einander vorzugsweise schneidende oder windschief zueinander stehende Schwenkachsen aufweisen, als Parallelgestänge ausgeführt. Dadurch kann das Koppelelement in stets gleicher Ausrichtung relativ beispielsweise zur Basis im Arbeitsraum geführt werden.

Besonders bevorzugt sind alle Unterarme aller Arme als Parallelgestänge ausgeführt. Dadurch wird eine besonders stabile Parallelführung des Koppelelements beispielsweise zur Basis erhalten.

Die Vorrichtung zeichnet sich dadurch aus, dass die Basis mitsamt den Schwenkachsen gegenüber dem Gestell um eine vorzugsweise vertikal auf der Fläche, auf der mit Artikeln umgegangen wird, oder auf den Flächen, zwischen denen mit Artikeln umgegangen wird, aufstehende Drehachse verdrehbar angetrieben gelagert ist.

Die Drehachse verläuft dabei orthogonal zu den Schwenkachsen, die wiederum in einer gemeinsamen Ebene liegen können, so dass in diesem Fall die Drehachse normal auf einer solchen gemeinsamen Ebene aufsteht. Die Orthogonalität der Drehachse zu den Schwenkachsen kann dabei gemäß der Orthogonalität von Vektoren, wie sie beispielsweise durch das Skalarprodukt überprüft werden kann, definiert sein. Die Dreh- und Schwenkachsen müssen sich dabei nicht schneiden, um orthogonal zueinander zu stehen.

Dadurch kann das Koppelelement beispielsweise nebst einem gegebenenfalls daran angeordneten Manipulator durch eine Drehung der Basis gegenüber dem Gestell um die Drehachse und/oder um eine parallel zur Drehachse verlaufende Koppelelementachse um sich selbst gedreht werden. Befindet sich das Koppelelement bei einem Drehen der Basis um die Drehachse nicht auf der Drehachse und soll eine Drehung des Koppelelements um sich selbst um die Koppelelementachse erfolgen, muss durch die Arme der Vorrichtung eine Ausgleichsbewegung über eine Koordinatentransformation erfolgen. Die Vorrichtung kann so beispielsweise synchron mit einer Veränderung des Drehwinkels die geänderte Arbeitsposition ausgleichen.

Als Antrieb für ein Verdrehen der Basis gegenüber dem Gestell um die Drehachse kann ein Drehantrieb mit oder ohne Getriebe, beispielsweise ein getriebeloser Direktantrieb, oder ein andersartiger, beispielsweise über eine oder mehrere Zugund/oder Druckstangen oder als Linearantrieb ausgeführter, auf die Basis einwirkender, beispielsweise elektrischer, pneumatischer oder hydraulischer Antrieb vorgesehen sein.

Eine besonders vorteilhafte Ausgestaltung sieht einen Direktantrieb als Drehantrieb vor, bei dem die Lagerung der Basis am Gestell einen ersten Teil des Drehantriebs bildet, und die Basis selbst einen mit dem ersten Teil zusammenwirkenden und gegenüber diesem verdrehbar angetriebenen zweiten Teil.

Vorzugsweise ist ein solcher Direktantrieb als ein Torquemotor ausgeführt, bei dem das Gestell Elemente des Stators umfasst oder diese bildet, oder ein entsprechender Stator am Gestell angeordnet ist, und die Basis vorzugsweise mit ihrem Außenumfang und/oder einer Partie desselben den Rotor bildet. Dabei kann die Basis mit einem kreisrunden Außenumfang ausgeführt an ihrem Außenumfang am oder im Gestell drehbar gelagert angeordnet sein.

Am Koppelelement kann ein Manipulator angeordnet sein oder das Koppelelement kann einen Manipulator umfassen oder von einem Manipulator umfasst werden.

Der Manipulator ist vorzugsweise unverdrehbar am Koppelelement vorgesehen.

Eine drehbare Anordnung des Manipulators am Koppelelement ist aufgrund der nunmehr drehbaren Ausgestaltung der gesamten Vorrichtung nicht mehr wie beim Stand der Technik notwendig.

Die Vorrichtung kann mindestens eine Teleskopwelle umfassen, welche wenigstens eine Drehbewegung zum Koppelelement übertragen kann. Die Teleskopwelle kann mit einem eigenen Teleskopwellenantrieb ausgestattet sein, der entweder auf der Basis mit dieser mitdrehend oder am Gestell angeordnet sein kann. In letzterem Fall ist eine Steuerung vorgesehen, welche Stellfehler des Teleskopwellenantriebs aufgrund von relativen Drehbewegungen der Basis gegenüber dem Gestell ausgleicht.

Die wenigstens eine vermittels zumindest einer Teleskopwelle zum Koppelelement übertragene Drehbewegung kann dazu vorgesehen sein, einen am Koppelelement vorgesehenen Manipulator zu betätigen, beispielsweise damit dieser eine Aktion ausführen kann.

Bei dem Manipulator kann es sich beispielsweise um einen Greifer handeln, der durch vermittels einer Teleskopwelle zum Koppelelement übertragene, gegensinnige Drehbewegungen geschlossen und geöffnet werden kann, entsprechend einem Zupacken und einem Loslassen eines oder mehrerer Artikel. Zwischen Zupacken und Loslassen kann eine Verbringung erfolgen, bei der die gegriffenen Artikel beispielsweise angehoben und versetzt werden können.

Bei einem beispielsweise als rotierender Finger ausgeführten Manipulator können vermittels einer Teleskopwelle zum Koppelelement übertragene Drehbewegungen dazu dienen, Artikel beispielsweise durch Reibung auf einer Fläche, auf der mit Artikeln umgegangen wird, auszurichten und/oder zu verbringen.

Bei einem beispielsweise zur Manipulation von als Behälter ausgeführten Artikeln durch Entfernen oder Aufbringen beispielsweise eines Schraubverschlusses vorgesehenen und entsprechend ausgeführten Manipulator können vermittels einer Teleskopwelle zum Koppelelement übertragene Drehbewegungen dazu dienen, beispielsweise Behälterdeckel - etwa im Recycling - auf- oder - beispielsweise bei der Abfüllung - zuzuschrauben.

Bei einem beispielsweise zur Behandlung von Artikeln beispielsweise durch Anbringung einer Umreifung um gruppierte Artikel vorgesehenen und entsprechend ausgeführten Manipulator können vermittels einer Teleskopwelle zum Koppelelement übertragene Drehbewegungen dazu dienen, beispielsweise ein Umreifungsband abzulängen und/oder dessen Enden nach dem Umwickeln der Artikel miteinander zu verbinden, beispielsweise durch bördeln. Dabei können für verschiedene erforderliche Aktionen eine entsprechende Anzahl von jeweils Drehbewegungen übertragende Teleskopwellen vorgesehen sein.

Vorzugsweise ist die Basis gegenüber dem Gestell ausgehend von einer Mittellage um zumindest 90° in beiden Richtungen um die Drehachse schwenkbar angetrieben.

Es ist ersichtlich, dass die Erfindung durch eine als ein Deltaroboter oder ein Tripode oder Tripod ausgeführte Vorrichtung zum Umgang mit Artikeln verwirklicht sein kann, bei der die Basis nebst den ansonsten beim Stand der Technik gestellfest ausgeführten Schwenkachsen der Oberarme um eine vorzugsweise normal auf der Basis aufstehende Drehachse drehbar angetrieben am Gestell oberhalb einer Fläche, auf der mit Artikeln umgegangen wird, oder auf den Flächen, zwischen denen mit Artikeln umgegangen wird, gelagert ist.

Vorteile gegenüber dem Stand der Technik sind neben einer Behebung der Eingangs erwähnten Nachteile des Standes der Technik unter Anderem, dass durch eine Drehung der Basis schnellere Verbringungen von Artikeln beispielsweise von einer Seite der Drehachse zur gegenüberliegenden Seite verwirklicht werden können, als dies beim Stand der Technik durch Ansteuerung und Betätigung aller Antriebe aller Oberarme erfolgt. Dadurch können vermittels der Erfindung schnellere Verbringungen und höhere Taktungen erzielt werden.

Zusätzliche Vorteile gegenüber dem Stand der Technik sind, dass im Vergleich zu einem verdrehbar am Koppelelement angeordneten Manipulator und dem zu dessen Verdrehen vermittels einer Teleskopwelle übertragbaren Drehmoment der Antrieb und damit das aufbringbare Drehmoment zum Verdrehen der Basis um die Drehachse wesentlich größer und stärker dimensioniert werden kann, einhergehend mit schnelleren erzielbaren Bewegungen und damit einer höheren Taktung.

Weitere erwähnenswerte Vorteile gegenüber dem Stand der Technik sind eine Verringerung des Eigengewichts der Vorrichtung am Koppelelement einhergehend mit einer vergrößerten, zum Umgang mit Artikeln zur Verfügung stehender Nutzlast. Dies hat außerdem eine nochmalige Steigerung der erzielbaren Taktung zur Folge.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Figur 1: eine Vorrichtung zum Umgang mit Artikeln mit einem in Form eines Greifers ausgeführten, an ihrem Koppelelement angeordneten Manipulator, in einer perspektivischen Ansicht von oberhalb gesehen.
- Figur 2: eine Detailansicht einer drehbar angetriebenen Anordnung der Basis einer Vorrichtung zum Umgang mit Artikeln an einem Gestell in einer teilweise geschnittenen, perspektivischen Ansicht von seitlich gesehen.
- Figur 3: eine Vorrichtung zum Umgang mit Artikeln mit einem in Form eines Greifers ausgeführten, an ihrem Koppelelement angeordneten Manipulator, in einer perspektivischen Ansicht von unterhalb gesehen.
- Figur 4: eine Detailansicht einer Vorrichtung zum Umgang mit Artikeln mit einem in Form eines Greifers ausgeführten, an ihrem Koppelelement angeordneten Manipulator, in einer perspektivischen Ansicht von unten gesehen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführüngsformen stellen lediglich Beispiele dar, wie die erfindungsgemäße Vorrichtung oder das erfindungsgemäße Verfahren ausgestaltet sein können und stellen keine abschließende Begrenzung dar.

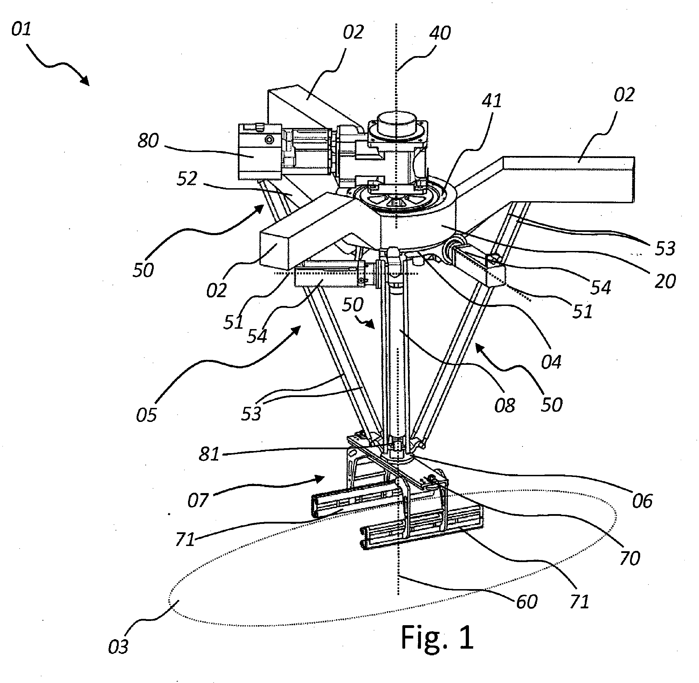

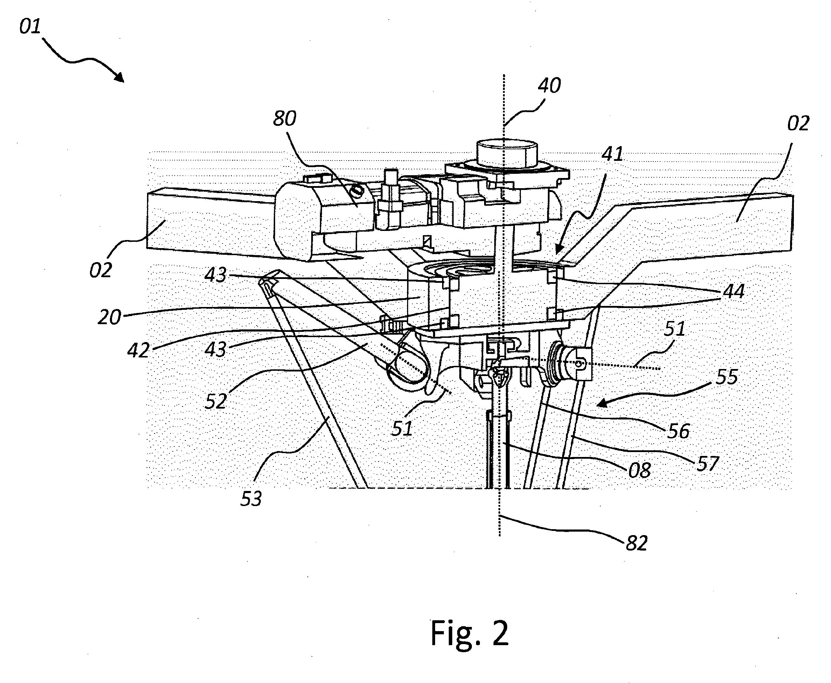

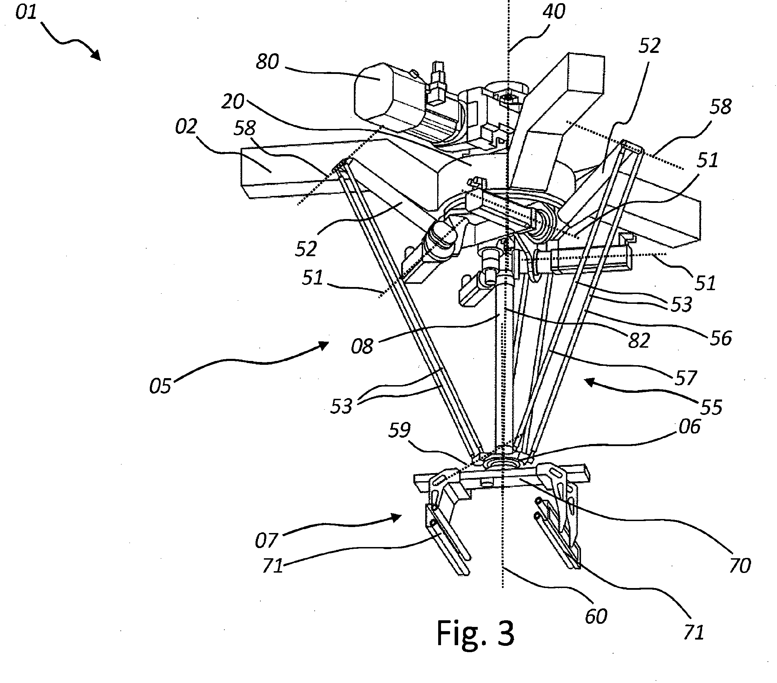

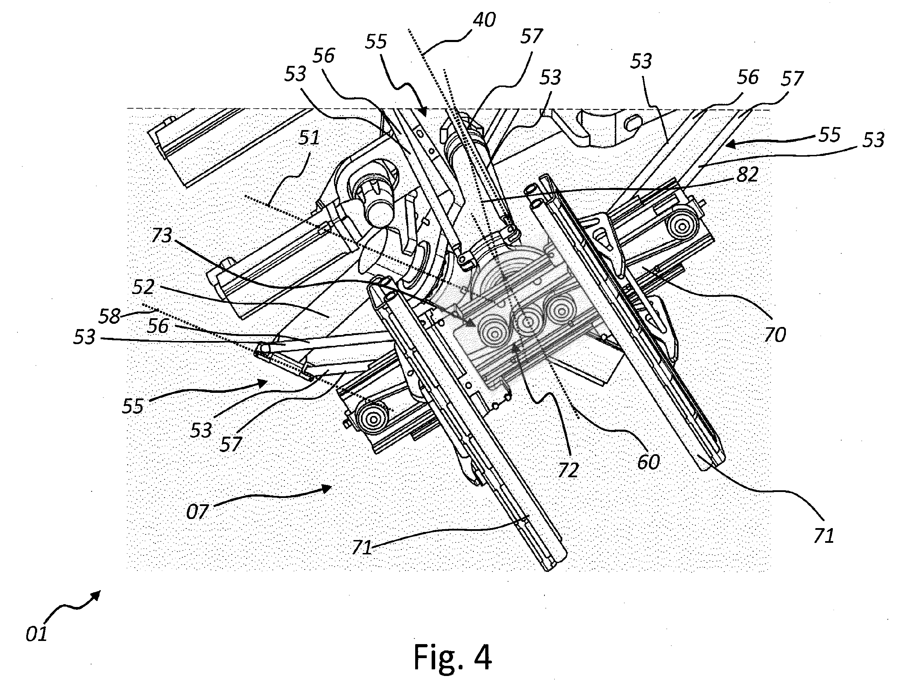

Eine in Figur 1 bis Figur 4 ganz oder in Teilen dargestellte Vorrichtung 01 zum Umgang mit Artikeln umfasst im Wesentlichen ein Gestell 02 mit einer beispielsweise zentralen Partie 20 oberhalb mindestens einer Fläche 03, auf der mit Artikeln umgegangen wird, eine Basis 04, welche an dem Gestell 02, vorzugsweise an der beispielsweise zentralen Partie 20 des Gestells 02 oberhalb der mindestens einen Fläche 03, auf der mit Artikeln umgegangen wird, angeordnet ist, sowie ein Gestänge 05 bestehend aus mindestens drei angetriebenen Armen 50 und einem zentralen Koppelelement 06.

Jeder der angetriebenen Arme 50 besteht aus einem um eine eigene, vorzugsweise parallel zu der mindestens einen Fläche 03, auf der mit Artikeln umgegangen wird, verlaufende und an der Basis 04 angeordnete Schwenkachse 51 drehbar angetrieben gelagerten Oberarm 52 und einem an dem Oberarm 52 gelenkig angeordneten und mit dem Koppelement 06 gelenkig verbundenen Unterarm 53.

Ferner verfügt jeder der angetriebenen Arme 50 über einen eigenen Antrieb 54 zum individuellen Verschwenken des jeweiligen Oberarms 52 um dessen Schwenkachse 51. Jeder Antrieb 54 jeden Oberarms 52 ist dabei unabhängig von den Antrieben 54 der verbleibenden Oberarme 52 steuerbar.

Die Basis 04 ist mitsamt den Schwenkachsen 51 gegenüber dem Gestell 02 um eine Drehachse 40 verdrehbar angetrieben gelagert.

Vorzugsweise ist die Basis gegenüber dem Gestell ausgehend von einer Mittellage um zumindest 90° in beiden Richtungen um die Drehachse schwenkbar angetrieben.

Dadurch, dass die Basis 04 mitsamt den Schwenkachsen 51 gegenüber dem Gestell 02 um eine Drehachse 40 verdrehbar ist, kann das Koppelelement 06 beispielsweise nebst einem gegebenenfalls daran angeordneten Manipulator 07 durch eine Drehung der Basis 04 gegenüber dem Gestell 02 um die Drehachse 40 und/oder um eine parallel zur Drehachse 40 verlaufende Koppelelementachse 60 um sich selbst gedreht werden. Befindet sich das Koppelelement 06 bei einem Drehen der Basis 04 um die Drehachse 40 nicht auf der Drehachse 40, wobei damit die Koppelachse 60 und die Drehachse 40 beispielsweise parallel sein können, aber nicht identisch sind, und soll eine Drehung des Koppelelements 06 um sich selbst um die Koppelelementachse 60 erfolgen, muss durch die Arme 50 des Gestänges 05 der Vorrichtung 01 eine Ausgleichsbewegung über eine Koordinatentransformation erfolgen. Die Vorrichtung 01 kann so beispielsweise synchron mit einer Veränderung des Drehwinkels um die Koppelelementachse 60 die geänderte Arbeitsposition ausgleichen.

Die Erfindung kann demnach durch eine als ein Deltaroboter oder ein Tripode oder Tripod ausgeführte Vorrichtung 01 zum Umgang mit Artikeln verwirklicht sein, bei der die Basis 04 nebst den ansonsten beim Stand der Technik gestellfest ausgeführten Schwenkachsen 51 der Oberarme 52 um eine vorzugsweise normal auf der Basis 04 aufstehende Drehachse 40 drehbar angetrieben am Gestell 02 oberhalb einer Fläche 03, auf der mit Artikeln umgegangen wird, oder auf den Flächen 03, auf und/oder zwischen denen mit Artikeln umgegangen wird, gelagert ist.

Als Antriebe 54 für die Oberarme 52 kommen via der Schwenkachsen 51 auf die Oberarme 52 einwirkende Schwenkantriebe mit oder ohne Getriebe, beispielsweise getriebelose Direktantriebe, oder andersartige, beispielsweise über Zug- und/oder Druckstangen oder als Linearantriebe ausgeführte, auf die Oberarme 52 einwirkende, beispielsweise elektrische, pneumatische oder hydraulische Antriebe 54 in Frage.

Die Drehachse 40 verläuft vorzugsweise orthogonal zu einer oder zu mehreren oder zu allen Schwenkachsen 51, an denen die Oberarme 52 der Arme 50 schwenkbar angetrieben gelagert sind. Die Drehachse 40 verläuft dabei orthogonal zu einer Schwenkachse 51, wenn das Skalarprodukt eines der Richtung einer Schwenkachse 51 entsprechenden Vektors und des der Richtung der Drehachse 40 entsprechenden Vektors gleich Null ist.

Bevorzugt liegen die Schwenkachsen 51, an denen die Oberarme 52 der Arme 50 schwenkbar angetrieben gelagert sind, innerhalb einer gemeinsamen Ebene. Verläuft die Drehachse 40 orthogonal zu den Schwenkachsen 51, so steht die Drehachse 40 normal auf der gemeinsamen Ebene auf.

Die Drehachse 40 kann beispielsweise vertikal auf der mindestens einen Fläche 03 aufstehen, auf der mit Artikeln umgegangen wird. Wird auf oder zwischen mehreren Flächen mit Artikeln umgegangen, kann die Drehachse 40 zumindest hinsichtlich eines Abschnitts einer oder mehrerer dieser Flächen 03 vertikal aufstehend ausgerichtet sein.

Als Antrieb für ein Verdrehen der Basis 04 gegenüber dem Gestell 02 um die Drehachse 40 kann ein Drehantrieb mit oder ohne Getriebe, beispielsweise ein getriebeloser Direktantrieb 41, oder ein andersartiger, beispielsweise über eine oder mehrere Zug- und/oder Druckstangen oder als Linearantrieb ausgeführter, auf die Basis 04 einwirkender, beispielsweise elektrischer, pneumatischer oder hydraulischer Antrieb vorgesehen sein.

Bei einem als Direktantrieb 41 ausgeführten Drehantrieb für ein Verdrehen der Basis 04 gegenüber dem Gestell 02 um die Drehachse 40 bildet vorzugsweise zumindest eine Partie der Lagerung der Basis 04 am Gestell 02 einen ersten Teil des Drehantriebs, und zumindest eine Partie der Basis 04 selbst einen mit dem ersten Teil zusammenwirkenden und gegenüber diesem verdrehbar angetriebenen zweiten Teil. Beispielsweise kann der Direktantrieb 41 als ein Torquemotor ausgeführt sein, bei dem das Gestell 02, vorzugsweise eine oder dessen zentrale Partie 20, zumindest ein oder mehrere Elemente 43 des Stators umfasst oder diese bildet, oder ein entsprechender Stator am Gestell 02 angeordnet ist. Die Basis 04 weist hierbei zumindest einen Bereich mit einem kreisrunden Außenumfang 42 auf, der zumindest zum Teil Elemente 44 des Rotors bildet. Alternativ kann ein entsprechender Rotor an der Basis 04, beispielsweise an deren kreisrundem Außenumfang 42 angeordnet sein. Ferner ist hierbei die Basis 04 vorzugsweise mit ihrem kreisrunden Außenumfang 42 am oder im Gestell 02, vorzugsweise an oder indessen zentraler Partie 20, drehbar gelagert.

Am Koppelelement 06 kann ein Manipulator 07 vorgesehen sein, oder das Koppelelement 06 kann einen Manipulator 07 umfassen, oder das Koppelelement 06 kann von einem Manipulator 07 umfasst sein.

Der Manipulator 07 kann unverdrehbar am Koppelelement 06 angeordnet sein. Eine drehbare Anordnung des Manipulators 07 am Koppelelement 06 ist aufgrund der im Vergleich zum Stand der Technik bei der vorliegenden Vorrichtung 01 drehbar angetriebenen Lagerung der Basis 04 nebst den an dieser angeordneten und mit der Basis 04 um deren Drehachse 40 verschwenkbaren Schwenkachsen 51 der Oberarme 52 der Arme 50 nicht unbedingt erforderlich, um den Manipulator 07 beispielsweise gegenüber einem oder mehreren Artikeln und/oder gegenüber der mindestens einen Fläche 03, auf der mit Artikeln umgegangen wird, beispielsweise in seiner Drehlage um die Koppelelementachse 60 auszurichten.

Die Vorrichtung 01 kann mindestens eine angetriebene Teleskopwelle 08 zwischen Basis 04 und Koppelelement 06 aufweisen, welche mit einem basisseitigen Teleskopwellenantrieb 80 kardanisch gelenkig verbunden ist, und über mindestens ein Kreuz- oder Kardangelenk 81 gelenkig drehbar am Koppelelement 06 gelagert ist, und welche wenigstens eine Drehbewegung vom Teleskopwellenantrieb 80 an der Basis 04 zum Koppelelement 06 übertragen kann.

Beispielsweise kann die Teleskopwelle 08 mit einer drehbaren Lagerung und/oder einer Welle am Koppelelement 06 verbunden sein.

Die Teleskopwelle 08 ist dabei als mittels Kreuz- oder Kardangelenken 81 mit ihrem Teleskopwellenantrieb 80 an der Basis 04 und mit der drehbaren Lagerung eines gegebenenfalls vorgesehenen Manipulators 07 am Koppelelement 06 verbundene Kardanwelle ausgeführt. Eine Teleskopwellenachse 82, entlang der sich die Teleskopwelle 08 erstreckt, kann dadurch gegenüber der Drehachse 40 der Basis 04 und gegenüber der Koppelelementachse 60 jeweils einen veränderlichen Winkel einschließen. Darüber hinaus ist die Teleskopwelle 08 als Teleskopstange ausgeführt, um verschiedene Abstände des Koppelelements 06 zur Basis 04 während dessen Bewegungen innerhalb eines Arbeitsraums ausgleichen zu können.

Der Arbeitsraum entspricht einem von einer Hüllfläche eingeschlossenen Volumen, auf der alle Punkte liegen, welche eine beispielsweise einen Manipulator 07 umfassende Vorrichtung 01 zum Umgang mit Artikeln bei größtmöglicher Auslenkung ihrer Arme 50 in allen Raumwinkelbereichen maximal zu erreichen in der Lage ist.

Die Teleskopwelle 08 kann zum Ausgleich verschiedener Abstände ineinanderschiebbar oder beispielsweise an der Basis 04 in Richtung deren momentaner axialer Erstreckung gleitend gelagert sein.

Wenigstens eine vermittels zumindest einer Teleskopwelle 08 zum Koppelelement 06 übertragene Drehbewegung kann dazu vorgesehen sein, einen am Koppelelement 06 vorgesehenen Manipulator 07 zu betätigen, beispielsweise damit dieser eine Aktion ausführen kann.

Eine vermittels einer Drehbewegung zumindest einer Teleskopwelle 08 betätigte, von einem Manipulator 07 ausführbare Aktion ist dabei abhängig von der Bauweise des Manipulators 07.

Beispielsweise kann der Manipulator 07 als ein Greifer 70 ausgeführt sein oder einen Greifer 70 umfassen. Durch vermittels einer Teleskopwelle 08 zum Koppelelement 06 übertragene, gegensinnige Drehbewegungen kann der Greifer 70 geschlossen und geöffnet werden, entsprechend einem Zupacken und einem Loslassen eines oder mehrerer Artikel. Zwischen Zupacken und Loslassen kann eine Verbringung erfolgen, bei der die gegriffenen Artikel beispielsweise angehoben und versetzt werden können. Der Greifer 70 besteht hierbei beispielsweise aus zwei gegeneinander beweglichen Klemm- oder Greifbacken 71 und einer Transformationseinrichtung 72, welche Drehbewegungen der Teleskopwelle 08 in Linearbewegungen der Klemm- oder Greifbacken 71 aufeinander zu oder voneinander weg umsetzt. Die Transformationseinrichtung 72 kann beispielsweise durch ein Zugmittelgetriebe 73, beispielsweise einen Riementrieb verwirklicht sein. Als Zugmittel kommen dabei beispielsweise Zahnriemen oder zahnlose Riemen, wie etwa Flach- oder Rundriemen, Keilriemen, Keilrippenriemen, Ketten und dergleichen in Frage. Die Aufzählung erhebt hierbei keinen Anspruch auf Vollständigkeit. Durch eine Drehbewegung der Teleskopwelle 08 in einer ersten Richtung werden die Klemm- oder Greifbacken 71 beispielsweise aufeinander zu bewegt und damit der Greifer 70 geschlossen. Durch eine gegensinnige Drehbewegung der Teleskopwelle 08 in einer zweiten, der ersten Richtung entgegengesetzten Richtung werden die Klemm- oder Greifbacken 71 beispielsweise voneinander weg bewegt und damit der Greifer 70 geöffnet.

Da sich kein Antrieb auf dem Greifer 70 befindet, ist keine Versorgung mit Steuer- und Energieleitungen notwendig. Hierdurch wird ein Greifer 70 erhalten, der im Vergleich zum Stand der Technik ein geringes Eigengewicht aufweist und dadurch massenarm ausgeführt ist.

Alternative Ausgestaltungen eines Manipulators 07 können beispielsweise einen als einen rotierenden Finger ausgeführten Manipulator vorsehen, der vermittels einer oder mehrerer via zumindest einer Teleskopwelle 08 zum Koppelelement 06 übertragenen Drehbewegungen in Rotation versetzt wird, beispielsweise um Artikel beispielsweise durch Reibung auf einer Fläche 03, auf der mit Artikeln umgegangen wird, auszurichten und/oder zu verbringen.

Ebenfalls denkbar ist, einen Manipulator 07 zur Manipulation von beispielsweise als Behälter ausgeführten Artikeln, etwa durch Entfernen oder Aufbringen beispielsweise eines Schraubverschlusses auszuführen. Eine zur Manipulation benötigte Bewegung des Manipulators wird hierbei vermittels wenigstens einer Drehbewegung, die vermittels zumindest einer Teleskopwelle 08 zum Koppelelement 06 übertragen wird, erzeugt. Beispielsweise können vermittels einer Teleskopwelle 08 zum Koppelelement 06 übertragene Drehbewegungen dazu dienen, beispielsweise Behälterdeckel - etwa im Recycling - auf- oder - beispielsweise bei der Abfüllung - zuzuschrauben.

Alternativ kann ein Manipulator 07 zur Behandlung von Artikeln beispielsweise durch Anbringung einer Umreifung um gruppierte Artikel vorgesehen und entsprechend ausgeführt sein. Dabei dienen eine oder mehrere vermittels wenigstens einer Teleskopwelle 08 zum Koppelelement 06 übertragene Drehbewegungen dazu, zur entsprechenden Behandlung notwendige Bewegungen und/oder Aktionen des Manipulators auszuführen, beispielsweise ein Umreifungsband abzulängen und/oder dessen Enden nach dem Umwickeln der Artikel miteinander zu verbinden, beispielsweise durch bördeln. Dabei können für verschiedene erforderliche Aktionen eine entsprechende Anzahl von jeweils Drehbewegungen übertragende Teleskopwellen 08 vorgesehen sein.

Wenigstens einer der Unterarme 53 kann als ein Parallelgestänge 55 aus zwei Elle und Speiche bildenden, parallel verlaufenden Gestängeelementen 56, 57 ausgebildet sein. Die den Unterarm 53 bildenden Gestängeelemente 56, 57 des Parallelgestänges 55 sind hierbei bevorzugt in Richtung der Erstreckung der Schwenkachse 51 des zugehörigen Oberarms 52 des jeweiligen Arms 50 zueinander beabstandet angeordnet.

Die gelenkigen Verbindungen der beiden Gestängeelemente 56, 57 eines Unterarms 53 mit dem zugehörigen Oberarm 52 des jeweiligen Arms 50 liegen dabei auf einer ersten, parallel zur Schwenkachse 51 des Oberarms 52 des jeweiligen Arms 50 verlaufenden Geraden 58. Ebenso liegen hierbei die gelenkigen Verbindungen der beiden Gestängeelemente 56, 57 mit dem Koppelelement 06 auf einer zweiten, parallel zur Schwenkachse 51 des zugehörigen Oberarms 52 des jeweiligen Arms 50 verlaufenden Geraden 59. Eine Ausführung eines Unterarms 53 als ein solches Parallelgestänge 55 hält das Koppelelement 06 parallel zur Schwenkachse 51 des zugehörigen Oberarms 52 des jeweiligen Arms 50.

Bevorzugt sind mindestens zwei Unterarme 53 von Armen 50, deren Oberarme 52 nicht parallel zueinander verlaufende, sondern einander vorzugsweise schneidende oder windschief zueinander stehende Schwenkachsen 51 aufweisen, bzw. um nicht parallel zueinander verlaufende Schwenkachsen 51 angetrieben gelagert sind, als Parallelgestänge 55 ausgeführt. Dadurch kann das Koppelelement 06 in stets gleicher Ausrichtung relativ beispielsweise zur Basis 04 im Arbeitsraum geführt werden.

Besonders bevorzugt sind die Unterarme 53 aller Arme 50 als Parallelgestänge 55 ausgeführt. Dadurch wird eine besonders stabile Parallelführung des Koppelelements 06 beispielsweise zur Basis 06 erhalten.

Wichtig ist hervorzuheben, dass die Drehbewegung der Basis 04 ausgehend von einer Mittellage um beispielsweise ± 90° um die Drehachse 40 schneller zu realisieren ist, als eine Linearbewegung, die mit dem gleichzeitigen Antrieb aller drei Arm-Schwenkachsen erzielt wird. Der Drehantrieb für die rotierende Basis 04 mitsamt seiner Lagerung kann sehr drehmomentstark dimensioniert werden, da er gestellfest ist und nicht mitbewegt wird. Eine Teleskopwelle 08 zum Übertragen einer Drehbewegung und damit eines Drehmoments für eine Betätigung eines am Koppelelement 06 angeordneten Manipulators 07, beispielsweise im Falle eines als Greifer 70 ausgeführten Manipulators das Drehmoment für die Bewegung der Klemm- oder Greifbacken 71 des Greifers 70, kann aufgrund des geringeren erforderlichen Drehmoments filigraner als beim Stand der Technik dimensioniert werden.

Die Erfindung ist insbesondere im Bereich der Herstellung und dem Betrieb von Vorrichtungen der Automatisierungstechnik gewerblich anwendbar, beispielsweise in der Automatisierungstechnik für die Lebensmittel- und Getränkeindustrie und/oder in der Verpackungstechnik und in der Verpackungsindustrie.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Gestell
- 03: Fläche, auf der mit Artikeln umgegangen wird
- 04: Basis
- 05: Gestänge
- 06: Koppelelement
- 07: Manipulator
- 08: Teleskopwelle
- 20: zentrale Partie des Gestells 02
- 40: Drehachse der Basis gegenüber dem Gestell 02
- 41: Direktantrieb zur Drehung der Basis 04 gegenüber dem Gestell 02
- 42: Außenumfang der Basis
- 43: Element des Stators
- 44: Element des Rotors
- 50: Arm
- 51: Schwenkachse
- 52: Oberarm
- 53: Unterarm
- 54: Antrieb zum Schwenken eines Oberarms 52
- 55: Parallelgestänge
- 56: Gestängeelement
- 57: Gestängeelement
- 58: Gerade
- 59: Gerade
- 60: Koppelelementachse
- 70: Greifer
- 71: Klemm- oder Greifbacken
- 72: Transformationseinrichtung
- 73: Zugmittelgetriebe
- 80: Teleskopwellenantrieb
- 81: Kreuz- oder Kardangelenk
- 82: Teleskopwellenachse

## Patentansprüche

1. Vorrichtung (01) zum Umgang mit Artikeln, umfassend:
- ein Gestell (02),
- eine Basis (04), welche an dem Gestell (02) angeordnet ist, sowie
- ein Gestänge (05) bestehend aus mindestens drei angetriebenen Armen (50) und einem zentralen Koppelelement (06),
wobei jeder der angetriebenen Arme (50):
- aus einem um eine eigene, an der Basis (04) angeordnete Schwenkachse (51) drehbar angetrieben gelagerten Oberarm (52) und einem an dem Oberarm (52) gelenkig angeordneten und mit dem Koppelement (06) gelenkig verbundenen Unterarm (53) besteht, und
- über einen eigenen Antrieb (54) zum individuellen Verschwenken des Oberarms (52) um dessen Schwenkachse (51) verfügt,
**dadurch gekennzeichnet, dass** die Basis (04) mitsamt den Schwenkachsen (51) gegenüber dem Gestell (02) um eine Drehachse (40) verdrehbar angetrieben gelagert ist.

2. Vorrichtung nach Anspruch 1, wobei die Drehachse (40) orthogonal zu den Schwenkachsen (51) verläuft.

3. Vorrichtung nach Anspruch 1 oder 2, wobei die Schwenkachsen (51) innerhalb einer gemeinsamen Ebene liegen.

4. Vorrichtung nach Anspruch 1, 2 oder 3, wobei ein als Direktantrieb (41) ausgeführter Drehantrieb für ein Verdrehen der Basis (04) gegenüber dem Gestell (02) um die Drehachse (40) vorgesehen ist, bei dem zumindest eine Partie der Lagerung der Basis (04) am Gestell (02) einen ersten Teil (43) des Drehantriebs (41) bildet, und zumindest eine Partie der Basis (04) einen mit dem ersten Teil (43) zusammenwirkenden und gegenüber diesem verdrehbar angetriebenen zweiten Teil (44).

5. Vorrichtung nach Anspruch 4, wobei der Direktantrieb (41) als ein Torquemotor ausgeführt ist, bei dem das Gestell (02) Elemente (43) des Stators umfasst oder diese bildet, oder ein entsprechender Stator am Gestell (02) angeordnet ist, und die Basis (04) einen kreisrunden Außenumfang (42) aufweist, der zumindest zum Teil wenigstens ein Element (44) des Rotors bildet oder ein entsprechender Rotor an der Basis (04) angeordnet ist, und die Basis (04) mit ihrem kreisrunden Außenumfang (42) am oder im Gestell (02) drehbar gelagert ist.

6. Vorrichtung nach einem der Ansprüche 1 bis 5, wobei wenigstens einer der Unterarme (53) als ein Parallelgestänge (55) aus zwei parallel verlaufenden Gestängeelementen (56, 57) ausgebildet ist.

7. Vorrichtung nach Anspruch 6, wobei die das Parallelgestänge (55) bildenden Gestängeelemente (56, 57) des Unterarms (53) in Richtung der Erstreckung der Schwenkachse (51) des zugehörigen Oberarms (52) des jeweiligen Arms (50) zueinander beabstandet sind und die gelenkigen Verbindungen der beiden Gestängeelemente (56, 57) mit dem Oberarm (52) auf einer ersten, parallel zur Schwenkachse (51) des zugehörigen Oberarms (52) des jeweiligen Arms (50) verlaufenden Geraden (58) liegen, sowie die gelenkigen Verbindungen der beiden Gestängeelemente (56, 57) mit dem Koppelelement (06) auf einer zweiten, parallel zur Schwenkachse (51) des zugehörigen Oberarms (52) des jeweiligen Arms (50) verlaufenden Geraden (59) liegen.

8. Vorrichtung nach Anspruch 6 oder 7, wobei mindestens zwei Unterarme (53) von Armen (50), deren Oberarme (52) um nicht parallel zueinander verlaufende Schwenkachsen (51) angetrieben gelagert sind, als Parallelgestänge (55) ausgeführt sind.

9. Vorrichtung nach einem der voranstehenden Ansprüche, wobei am Koppelelement (06) ein Manipulator (07) vorgesehen ist oder das Koppelelement (06) einen Manipulator (07) umfasst oder das Koppelelement (06) von einem Manipulator (07) umfasst wird.

10. Vorrichtung nach Anspruch 9, wobei der Manipulator (07) unverdrehbar am Koppelelement (06) angeordnet ist.

11. Vorrichtung nach einem der voranstehenden Ansprüche, wobei mindestens eine angetriebene Teleskopwelle (08) zwischen Basis (04) und Koppelelement (06) vorgesehen ist, welche mit einem basisseitigen Teleskopwellenantrieb (80) kardanisch gelenkig verbunden ist, und über mindestens ein Kreuz- oder Kardangelenk (81) gelenkig drehbar am Koppelelement (06) gelagert ist, und welche wenigstens eine Drehbewegung vom Teleskopwellenantrieb (80) an der Basis (04) zum Koppelelement (06) überträgt.

12. Vorrichtung nach Anspruch 11, wobei der Teleskopwellenantrieb (80) an der Basis (04) mit dieser mitdrehend oder gestellfest angeordnet ist, wobei bei der gestellfesten Anordnung eine Steuerung vorgesehen ist, welche Stellfehler des Teleskopwellenantriebs (80) aufgrund von relativen Drehbewegungen der Basis (04) gegenüber dem Gestell (02) ausgleicht.

13. Vorrichtung nach Anspruch 11 oder 12, wobei wenigstens eine vermittels zumindest einer Teleskopwelle (08) zum Koppelelement (06) übertragene Drehbewegung dazu dient, einen am Koppelelement (06) vorgesehenen Manipulator (07) zu betätigen.

14. Vorrichtung nach Anspruch 13, wobei der Manipulator (07):
- einen Greifer (70) umfasst, der durch vermittels wenigstens einer Teleskopwelle (08) zum Koppelelement (06) übertragene, gegensinnige Drehbewegungen geschlossen und geöffnet werden kann, und/oder
- einen rotierenden Finger umfasst, der vermittels mindestens einer via wenigstens einer Teleskopwelle (08) zum Koppelelement (06) übertragenen Drehbewegung in Rotation versetzt wird, und/oder
- zur Manipulation von Artikeln vorgesehen ist, wobei eine zur Manipulation benötigte Bewegung des Manipulators (07) vermittels wenigstens einer Drehbewegung, die vermittels zumindest einer Teleskopwelle (08) zum Koppelelement (06) übertragen wird, erzeugt wird, und/oder
- zur Behandlung von Artikeln vorgesehen ist, wobei vermittels wenigstens einer Teleskopwelle (08) zum Koppelelement (06) übertragene Drehbewegungen dazu dienen, zur entsprechenden Behandlung notwendige Bewegungen und/oder Aktionen des Manipulators (07) auszuführen.

15. Vorrichtung nach einem der voranstehenden Ansprüche, wobei die Basis (04) gegenüber dem Gestell (02) ausgehend von einer Mittellage um zumindest 90° in beiden Richtungen um die Drehachse (40) schwenkbar angetrieben ist.

## Claims

1. An apparatus (01) for handling articles comprising:
- a frame (02),
- a base (04), which is arranged on the frame (02), as well as
- a linkage assembly (05) consisting of at least three driven arms (50) and a central coupling element (06),
wherein each of the driven arms (50):
- consists of an upper arm (52), which is mounted to be rotatably driven about a respective pivoting axis (51) arranged on the base (04), and a lower arm (53), which is articulatedly mounted on the upper arm (52) and articulatedly connected with the coupling element (06), and
- has a respective drive (54) for individually pivoting the upper arm (52) about the respective pivoting axis (51),
**characterised in that** the base (04) is mounted to be rotatably driven together with the pivoting axes (51) in relation to the frame (02) about a rotation axis (40).

2. The apparatus as recited in claim 1 wherein the rotation axis (40) runs orthogonal to the pivoting axes (51).

3. The apparatus as recited in claim 1 or 2, wherein the pivoting axes (51) lie within a common plane.

4. The apparatus as recited in claim 1, 2 or 3, wherein a direct drive (41) is provided, which is constructed as a rotary actuator, for twisting the base (04) in relation to the frame (02) about the rotation axis (40), for which direct drive (41) at least a section of the bearing of the base (04) at the frame (02) forms a first part (43) of the rotary actuator (41), and at least a section of the base (04) forms a driven second part (44), which interacts with the first part (43) and is twistable in relation to it.

5. The apparatus as recited in claim 4 wherein the direct drive (41) is constructed as a torque motor, for which the frame (02) comprises elements (43) of the stator or forms these elements (43), or a corresponding stator is arranged on the frame (02), and the base (04) has a circular outer circumference (42), which at least partially forms at least one element (44) of the rotor, or a corresponding rotor is arranged at the base (04), and the base (04) is rotatably mounted with its circular outer circumference (42) on or in the frame (02).

6. The apparatus as recited in one of the claims 1 to 5 wherein at least one of the lower arms (53) is formed as a parallel linkage (55) of two parallel-running linkage elements (56, 57).

7. The apparatus as recited in claim 6 wherein the linkage elements (56, 57) forming the parallel linkage (55) of the lower arm (53) are spaced apart from each other in the direction of the extension of the pivoting axis (51) of the corresponding upper arm (52) of the respective arm (50), and the articulated connections of the two linkage elements (56, 57) with the upper arm (52) are located on a first straight line (58) running parallel to the pivoting axis (51) of the corresponding upper arm (52) of the respective arm (50), and the articulated connections of the two linkage elements (56, 57) with the coupling element (06) are located on a second straight line (59) running parallel to the pivoting axis (51) of the corresponding upper arm (52) of the respective arm (50).

8. The apparatus as recited in claim 6 or 7 wherein at least two lower arms (53) of arms (50), the upper arms (52) of which are mounted to be driven about pivoting axes (51) not running parallel to each other, are constructed as parallel linkages (55).

9. The apparatus as recited in one of the previous claims wherein a manipulator (07) is provided at the coupling element (06), or the coupling element (06) comprises a manipulator (07), or the coupling element (06) is comprised by a manipulator (07).

10. The apparatus as recited in claim 9 wherein the manipulator (07) is arranged in a non-twistable manner at the coupling element (06).

11. The apparatus as recited in one of the previous claims wherein at least one driven telescopic shaft (08) is provided between the base (04) and the coupling element (06), which telescopic shaft (08) is connected in a cardanically articulated manner with a telescopic shaft drive (80) on the side of the base, and which is mounted at the coupling element (06) to be articulatedly rotatable via at least one universal joint or cardan joint (81), and which transfers at least one rotary motion from the telescopic shaft drive (80) at the base (04) to the coupling element (06).

12. The apparatus as recited in claim 11 wherein the telescopic shaft drive (80) is arranged at the base (04) to be co-rotating with the base or fixed at the frame, wherein, in the arrangement fixed at the frame, a control is provided, which compensates positioning errors of the telescopic shaft drive (80) resulting from relative rotary motions of the base (04) in relation to the frame (02).

13. The apparatus as recited in claim 11 or 12 wherein at least one rotary motion transferred to the coupling element (06) by means of at least one telescopic shaft (08) serves for actuating a manipulator (07) provided at the coupling element (06).

14. The apparatus as recited in claim 13 wherein the manipulator (07):
- comprises a gripper (70), which can be closed or opened by rotary motions in an opposite sense transferred by means of at least one telescopic shaft (08) to the coupling element (06), and/or
- comprises at least one rotating finger, which is set in rotation by means of at least one rotary motion transferred via at least one telescopic shaft (08) to the coupling element (06), and/or
- is provided for manipulating articles, wherein a motion of the manipulator (07), which motion is required for manipulating, is generated by means of at least one rotary motion, which is transferred by at least one telescopic shaft (08) to the coupling element (06), and/or
- is provided for treating articles, wherein rotary motions transferred by means of at least one telescopic shaft (08) to the coupling element (06) serve for carrying out motions and/or actions of the manipulator (07), which motions and/or actions are required for the corresponding treatment.

15. The apparatus as recited in one of the previous claims wherein the base (04) is pivotably driven about the rotation axis (40) by at least 90 degrees in both directions in relation to the frame (02), taking a central position as a starting point.

## Revendications

1. Dispositif (01) de manutention d'articles, comprenant:
- un bâti (02),
- une base (04) qui est disposée sur ledit bâti (02) et
- une tringlerie (05) se composant d'au moins trois bras (50) entraînés et d'un élément de couplage (06) central,
dans lequel chacun des bras (50) entraînés:
- se compose d'un bras supérieur (52) qui est logé de manière à être entraîné en rotation autour d'un propre axe de pivotement (51) disposé sur la base (04) ainsi que d'un bras inférieur (53) qui est disposé de manière articulée sur le bras supérieur (52) et est relié de manière articulée à l'élément de couplage (06), et
- dispose d'un propre mécanisme d'entraînement (54) pour faire pivoter individuellement le bras supérieur (52) autour de son axe de pivotement (51),
**caractérisé par le fait que** ladite base (04) avec les axes de pivotement (51) est logée de manière à être entraînée en rotation autour d'un axe de rotation (40) par rapport au bâti (02).

2. Dispositif selon la revendication 1, dans lequel l'axe de rotation (40) s'étend orthogonalement aux axes de pivotement (51).

3. Dispositif selon la revendication 1 ou 2, dans lequel les axes de pivotement (51) se situent dans un plan commun.

4. Dispositif selon la revendication 1, 2 ou 3, dans lequel un mécanisme d'entraînement rotatif réalisé comme entraînement direct (41) est prévu pour une rotation de la base (04) par rapport au bâti (02) autour de l'axe de rotation (40), dans lequel au moins une partie du logement de la base (04) sur le bâti (02) forme une première partie (43) de l'entraînement rotatif (41) et au moins une partie de la base (04) forme une deuxième partie (44) agissant de concert avec la première partie (43) et entraînée en rotation par rapport à celle-ci.

5. Dispositif selon la revendication 4, dans lequel l'entraînement direct (41) est réalisé comme un moteur couple dans lequel le bâti (02) comprend des éléments (43) du stator ou forme ceux-ci, ou un stator correspondant est disposé sur le bâti (02), et la base (04) présente une circonférence extérieure (42) ronde qui, au moins en partie, forme au moins un élément (44) du rotor, ou un rotor correspondant est disposé sur la base (04), et la base (04) est logée à rotation sur ou dans le bâti (02) par sa circonférence extérieure (42) ronde.

6. Dispositif selon l'une quelconque des revendications 1 à 5, dans lequel l'un au moins des bras inférieurs (53) est réalisé comme une tringlerie parallèle (55) formée de deux éléments de tringlerie (56, 57) s'étendant parallèlement.

7. Dispositif selon la revendication 6, dans lequel les éléments de tringlerie (56, 57) du bras inférieur (53) qui forment ladite tringlerie parallèle (55) sont espacés l'un de l'autre dans la direction de l'extension de l'axe de pivotement (51) du bras supérieur (52) associé du bras (50) respectif, et les liaisons articulées des deux éléments de tringlerie (56, 57) sont situées, avec le bras supérieur (52), sur une première droite (58) s'étendant parallèlement à l'axe de pivotement (51) du bras supérieur (52) associé du bras (50) respectif, et les liaisons articulées des deux éléments de tringlerie (56, 57) sont situées, avec ledit élément de couplage (06), sur une deuxième droite (59) s'étendant parallèlement à l'axe de pivotement (51) du bras supérieur (52) associé du bras (50) respectif.

8. Dispositif selon la revendication 6 ou 7, dans lequel au moins deux bras inférieurs (53) de bras (50) dont les bras supérieurs (52) sont logés à entraînement autour d'axes de pivotement (51) non parallèles entre eux sont réalisés en tant que tringlerie parallèle (55).

9. Dispositif selon l'une quelconque des revendications précédentes, dans lequel un manipulateur (07) est prévu sur l'élément de couplage (06) ou l'élément de couplage (06) comprend un manipulateur (07) ou l'élément de couplage (06) est compris par un manipulateur (07).

10. Dispositif selon la revendication 9, dans lequel le manipulateur (07) est disposé de manière non rotative sur ledit élément de couplage (06).

11. Dispositif selon l'une quelconque des revendications précédentes, dans lequel au moins un arbre télescopique (08) mené est prévu entre la base (04) et l'élément de couplage (06), qui est relié de manière articulée par un joint de Cardan à un entraînement d'arbre télescopique (80) côté base et est logé à rotation et de manière articulée par au moins un joint universel ou de Cardan (81) sur l'élément de couplage (06) et qui transmet au moins un mouvement de rotation de l'entraînement d'arbre télescopique (80) sur la base (04) audit élément de couplage (06).

12. Dispositif selon la revendication 11, dans lequel l'entraînement d'arbre télescopique (80) est disposé sur la base (04) de manière à tourner avec elle ou est disposé d'une manière solidaire du bâti, dans lequel, lorsqu'il est disposé d'une manière solidaire du bâti, une commande est prévue qui compense des erreurs de réglage de l'entraînement d'arbre télescopique (80) dues à des mouvements relatifs de rotation de la base (04) par rapport au bâti (02).

13. Dispositif selon la revendication 11 ou 12, dans lequel au moins un mouvement de rotation transmis à l'élément de couplage (06) par l'intermédiaire d'au moins un arbre télescopique (08) sert à actionner un manipulateur (07) prévu sur l'élément de couplage (06).

14. Dispositif selon la revendication 13, dans lequel ledit manipulateur (07):
- comprend un préhenseur (70) qui peut être fermé et ouvert par des mouvements de rotation en sens inverse transmis à l'élément de couplage (06) par l'intermédiaire d'au moins un arbre télescopique (08), et/ou
- comprend un doigt rotatif qui est mis en rotation par l'intermédiaire d'au moins un mouvement de rotation transmis à l'élément de couplage (06) via au moins un arbre télescopique (08), et/ou
- est prévu pur la manipulation d'articles, un mouvement du manipulateur (07), qui est requis pour la manipulation, étant généré au moyen d'au moins un mouvement de rotation qui est transmis à l'élément de couplage (06) par l'intermédiaire d'au moins un arbre télescopique (08), et/ou
- est prévu pour le traitement d'articles, des mouvements de rotation transmis à l'élément de couplage (06) par l'intermédiaire d'au moins un arbre télescopique (08) servant à effectuer des mouvements et/ou actions du manipulateur (07) qui sont nécessaires au traitement correspondant.

15. Dispositif selon l'une quelconque des revendications précédentes, dans lequel la base (04) est entraînée à pivotement, par rapport au bâti (02), autour de l'axe de rotation (40), à partir d'une position centrale, d'au moins 90° dans les deux directions.
